Europäisches Patentamt

European Patent Office

Office européen des brevets

(11) Veröffentlichungsnummer : **0 123 027**
**B1**

(12) **EUROPÄISCHE PATENTSCHRIFT**

(45) Veröffentlichungstag der Patentschrift :
15.04.87

(51) Int. Cl.⁴ : **B 23 K 35/30**, C 22 C 19/05

(21) Anmeldenummer : 84101109.1

(22) Anmeldetag : 03.02.84

(54) Schweissdraht zum porenfreien Einschweissen von Rohren in Rohrböden von Wärmetauschern oder dgl.

(30) Priorität : 21.04.83 DE 3314389

(43) Veröffentlichungstag der Anmeldung :
31.10.84 Patentblatt 84/44

(45) Bekanntmachung des Hinweises auf die Patenterteilung : 15.04.87 Patentblatt 87/16

(84) Benannte Vertragsstaaten :
AT BE CH DE FR GB IT LI LU NL SE

(56) Entgegenhaltungen :
AT-B- 322 316
FR-A- 2 197 686
US-A- 2 587 275

(73) Patentinhaber : **MAN GUTEHOFFNUNGSHÜTTE
GMBH**
**Bahnhofstrasse, 66 Postfach 11 02 40**
**D-4200 Oberhausen 11 (DE)**

(72) Erfinder : **Datta, Ratan, Dipl.-Ing.**
**Elstner Strasse 26**
**D-4200 Oberhausen 11 (DE)**
Erfinder : **Knoche, Ernst, Dipl.-Ing.**
**Uerdinger Strasse 83**
**D-4130 Moers 1 (DE)**
Erfinder : **Million, Karl, Dr.-Ing.**
**Beerenstrasse 40**
**D-4200 Oberhausen 11 (DE)**

# 0 123 027

**Beschreibung**

Die Erfindung bezieht sich auf einen Schweißdraht aus Nickelbasislegierung zum Einschweißen von Nickel-Chrom-basislegierten Rohren in mit Nickelbasislegierung plattierte Rohrböden.

Beim Einschweißen von Rohren aus z. B. X 10 Ni Cr Al Ti 3220-Legierung (Incoloy-Typ) nach VdTÜV-Werkstoffblatt 412/7.77 in z. B. Ni Cr 15 Fe-(VdTÜV-Werkstoffblatt 305-1/79) plattierte (Inconel-Typ) Rohrböden von Dampferzeugern und anderen Wärmetauschern wird üblicherweise so verfahren, daß der Hersteller der Rohrbodenplattierung dem Schweißdrahthersteller eine Lieferspezifikation vorgibt. Dabei werden bislang keine Angaben hinsichtlich des Sauersstoffgehalts des Schweißdrahtes gemacht. Die handelsüblichen Schweißdrähte des Typs Ni Cr 15 Fe weisen einen Sauerstoffgehalt von weit unter 150 ppm (meistens unter 50 ppm) auf.

Bei Verwendung dieser handelsüblichen Schweißdrähte vom Ni Cr 15 Fe-Typ zum Einschweißen von Nickel-Chrom-basislegierten Rohren in mit Nickelbasislegierung plattierte Rohrböden von Dampferzeugern oder dergl. treten nun aber häufig dadurch Schwierigkeiten auf, daß sich beim Einschweißen Poren in den Schweißnähten bilden. Diese Poren entstehen durch zwischen Rohrbodenbohrung und das jeweils eingelegte Rohr eingeschlossene Luft, die während des Schweißvorganges durch Wärmeausdehnung in das Schweißbad eindringt und innerhalb der erstarrenden Schweißraupe verbleibt.

Besonders bei Wärmeaustauschern für Kernkraftwerksanlagen, bei denen für die Dampferzeugung von Druckwasser-Reaktoren z. B. über 8000 Rohreinschweißungen pro Dampferzeuger erforderlich sind, muß die Porenfreiheit der Schweißnähte wegen der strengen Sicherheitsbestimmungen gewährleistet sein. Die weitgehende Porenfreiheit der Schweißnähte stellt den Hersteller derartiger Dampferzeuger vor ein ernstes Problem.

Weil üblicherweise zur Erhöhung der Korrosionsbeständigkeit der Wärmetauscherrohre von außen glasgestrahlte Rohre verwendet werden, bei denen durch die Glasstrahlung eine relativ große Oberflächenrauhigkeit erzeugt wird, nimmt hier der zwischen Rohr und Rohrbodenbohrung eingeschlossene Luftanteil noch zu.

Nun kann man zwar die Porenbildung beim Schweißen in bestimmten Grenzen halten, wenn zuvor die Plattierung des Rohrbodens mit Hilfe des Unterpulver-Band-plattierungsverfahrens hergestellt wurde, da dieses Verfahren auf metallurgischem Wege die chemische Zusammensetzung des Bandzusatzwerkstoffes günstig hinsichtlich der Vermeidung von Porenbildung beeinflußt, doch kann damit die Porenbildung beim Einschweißen der Rohre auch nicht immer verhindert werden.

Bei Anwendung anderer bekannter Verfahren, wie beispielsweise des Plasma-Heißdrahtverfahrens zum Plattieren von Rohrböden der zuvor genannten Art, bei dem der Plattierungswerkstoff während des Plattierungsvorganges nur geringfügige Änderungen in der chemischen Zusammensetzung erfährt, ist die Porenbildung in den Schweißnähten unzulässig hoch. Hier hilft man sich in der Weise, daß man die Enden der glasgestrahlten, also oberflächenrauhen Rohre überschleift und anschließend sorgfältig säubert bzw. die Rohre an die Bohrungswände des Rohrbodens andrückt und damit den Einschluß von Luft und somit die Porenbildung zu reduzieren sucht.

Alle diese Maßnahmen sind arbeitsintensiv und gewährleisten im übrigen nicht mit Sicherheit eine Porenfreiheit der Schweißnähte.

Aufgabe der Erfindung ist es daher, einen Schweißdraht für das Einschweißen von Nickel-Chrom-basislegierten Rohren in mit Nickelbasislegierung plattierte Rohrböden zur Verfügung zu stellen, bei dessen Verwendung weitgehend Porenfreiheit der Schweißnähte gewährleistet werden kann.

Untersuchungen haben gezeigt, daß die Porenbildung in Schweißnähten an Dampferzeugerrohren der genannten Art in direkter Verbindung mit dem Fließverhalten des Schweißbades stehen. Am porenanfälligsten sind dickflüssige und chemisch reine Schweißbäder, d. h. solche Schweißbäder, die wenig nichtmetallische Verunreinigungen enthalten und die daher saubere, oxydfreie Oberflächen ergeben. Dünnflüssige Schweißbäder geben porenfreie Nähte, die nach der Erstarrung oxydierte Oberflächen aufweisen.

Von diesen Erkenntnissen ausgehend wurde als Lösung der Aufgabe der Erfindung ermittelt, daß zur Ausschwemmung der Luftbläschen aus dem Schweißbad ein Schweißdraht verwendet werden muß, der neben einem dünnflüssigen Schweißbad das gleichzeitige Ausscheiden von Feststoffen aus der Schweißbadschmelze gewährleistet. Der erfindungsgemäße Schweißdraht ist nach der im Kennzeichen des Patentanspruchs aufgezeigten chemischen Analyse zusammengesetzt.

Mit dem Schweißdraht gemäß der Erfindung lassen sich porenfreie Schweißnähte auf unterschiedlichen Plattierungswerkstoffen herstellen. Maßgebend ist die Abstimmung des Sauerstoffgehaltes des Schweißdrahtes, der die Dünnflüssigkeit des Schmelzbades bestimmt, auf den Sauerstoffgehalt der Rohrbodenplattierung, d. h. je niedriger in der Plattierung der Sauerstoffgehalt ist, desto höher muß der Sauerstoffgehalt im Schweißdraht sein.

Ein Anwendungsbeispiel stellt sich wie folgt dar :

(Siehe Tabelle Seite 3 f.)

2

|  | Plattierung (Gew. %) | Draht (Gew. %) |
|---|---|---|
| Ni | 72,2 | $\geq$ 70 |
| Cr | 19,7 | 18 bis 23 |
| Fe | 2,2 | $\leq$ 3,0 |
| O | 0,003 | 0,0235 |
| N | 0,009 | $\leq$ 0,030 |
| Ti | 0,49 | $\leq$ 0,10 |
| Si | 0,15 | $\leq$ 0,35 |
| Mn | 2,90 | $\leq$ 4,0 |
| Nb | 2,40 | 1,75 bis 2,50 |
| C | 0,014 | $\leq$ 0,030 |
| Mo | 0,020 | $\leq$ 0,020 |
| Ta | 0,040 | $\leq$ 0,050 |
| Co | 0,006 | $\leq$ 0,050 |
| Mg | 0,004 | $\leq$ 0,050 |
| Cn | 0,004 | $\leq$ 0,050 |
| P | 0,004 | $\leq$ 0,020 |
| S | 0,008 | $\leq$ 0,010 |

Die Legierung zur Herstellung des erfindungsgemäßen Schweißdrahtes läßt sich in konventioneller Weise, beispielsweise in einem Induktionsvakuumofen, erschmelzen. Aus aus Gußblöcken geschmiedeten Knüppeln können anschließend die Schweißdrähte gewalzt und gezogen werden. Der erfindungsgemäße Schweißdraht mit der nach dem Kennzeichen des Patentanspruchs genannten chemischen Analyse läßt sich aber auch über das Unterpulver-Auftragschweißen herstellen. Diese Herstellungsmethode kann in Betracht gezogen werden, wenn beispielsweise nur geringe Mengen an Schweißdraht benötigt werden. In diesem Fall wird zum Unterpulver-Auftragschweißen eine übliche Ni Cr 15 Fe-Schweißelektrode verwendet. Beim UP-Auftragschweißen wird das Einbringen von mehr als 150 ppm Sauerstoff erreicht. Aus dem durch Auftragschweißen erhaltenen Knüppel können dann Schweißdrähte gewalzt und gezogen werden.

**Patentanspruch**

Schweißdraht aus Nickelbasislegierung zum porenfreien Einschweißen von Nickel-Chrom-basislegierten Rohren in mit Nickelbasislegierung plattierte Rohrböden, gekennzeichnet durch folgende chemische Zusammensetzung (Gew. %) :

| | |
|---|---|
| Nickel | $\geq$ 70 % |
| Chrom | 18 % bis 23 % |
| Eisen | $\leq$ 3 % |
| Sauerstoff | $\geq$ 0,015 % |
| Stickstoff | $\leq$ 0,030 % |
| Titan | $\leq$ 0,10 % |
| Silizium | $\leq$ 0,35 % |
| Mangan | $\leq$ 4,0 % |
| Niob | 1,75 bis 2,50 % |
| Kohlenstoff | $\leq$ 0,030 % |
| Molybdän | $\leq$ 0,020 % |
| Tantal | $\leq$ 0,050 % |
| Kobald | $\leq$ 0,050 % |
| Magnesium | $\leq$ 0,050 % |
| Kupfer | $\leq$ 0,050 % |
| Phosphor | $\leq$ 0,020 % |
| Schwefel | $\leq$ 0,010 % |

**0 123 027**

**Claim**

Welding wire of nickel based alloy for the pore free welding of tubes of nickel-chrome based alloys in tube bases plated with nickel based alloy, characterised by the following chemical composition :

| | |
|---|---|
| Nickel | ≥ 70 % |
| Chromium | 18 % to 23 % |
| Iron | ≤ 3 % |
| Oxygen | ≥ 0.015 % |
| Nitrogen | ≤ 0.030 % |
| Titanium | ≤ 0.10 % |
| Silicon | ≤ 0.35 % |
| Manganese | ≤ 4.0 % |
| Niobium | 1.75 to 2.50 % |
| Carbon | ≤ 0.030 % |
| Molybdenum | ≤ 0.020 % |
| Tantalum | ≤ 0.050 % |
| Cobalt | ≤ 0.050 % |
| Magnesium | ≤ 0.050 % |
| Copper | ≤ 0.050 % |
| Phosphorus | ≤ 0.020 % |
| Sulphur | ≤ 0.010 % |

**Revendication**

Fil à souder en alliage à base de nickel pour le soudage exempt de pores de tubes en alliage à base de nickel-chrome sur des fonds de tubes plaqués en alliage à base de nickel, fil à souder caractérisé par la composition chimique suivante (% en poids)

| | |
|---|---|
| Nickel | ≥ 70 % |
| Chrome | 18 % à 23 % |
| Fer | ≤ 3 % |
| Oxygène | ≥ 0,015 % |
| Azote | ≤ 0,030 % |
| Titane | ≤ 0,10 % |
| Silicium | ≤ 0,35 % |
| Manganèse | ≤ 0,4 % |
| Niobium | 1,75 à 2,5 % |
| Carbone | ≤ 0,030 % |
| Molybdène | ≤ 0,020 % |
| Tantale | ≤ 0,050 % |
| Cobalt | ≤ 0,050 % |
| Magnésium | ≤ 0,050 % |
| Cuivre | ≤ 0,050 % |
| Phosphore | ≤ 0,020 % |
| Soufre | ≤ 0,010 % |